# EUROPEAN PATENT SPECIFICATION

(11) **EP 2 260 730 B1**
(45) Date of publication and mention of the grant of the patent: **26.06.2019**
(21) Application number: 10380062.9
(22) Date of filing: 04.05.2010
(51) Int. Cl.: A23N 3/02, A23N 3/06, A23N 4/08, A23P 20/25, A23L 19/00

(54) **Machine for the pitting and filling of olives.**
Maschine zum Entkernen und Füllen von Oliven
Machine pour dénoyauter et farcir les olives

(30) Priority: 09.06.2009 ES 200930288
(43) Date of publication of application: 15.12.2010
(73) Proprietor: Internacional Olivarera, S.A., 41700 Dos Hermanas Sevilla (ES)
(72) Inventor: Agroba Rodriguez, Angel, 41700 Dos Hermanas, Sevilla (ES)
(74) Representative: Carvajal y Urquijo, Isabel

(56) References cited:
- ES-A6- 2 021 227
- US-A- 4 090 439
- US-A- 4 096 795
- US-A- 4 644 859
- US-A- 4 847 101

## Description

### FIELD OF THE INVENTION

The present invention refers to the technical field of machinery used for the production of edible product fillings, and more specifically, for the pitting and filling of olives, through ball-shaped paste fillings made of crushed products.

### BACKGROUND OF THE INVENTION

It is known in the state of the art that fillings used for olives are usually made of edible products such as anchovies and peppers, which are crushed to form a paste. The paste thus obtained is usually treated with gelling products, thus obtaining a band which is cut in small strips, and these strips are later inserted in previously de-stoned olives. This system has several disadvantages. The first of them is that the handling of the strips for their insertion in the olives is difficult and requires great amount of time, which hinders a high production and increases the cost thereof. Besides, the fact that the paste is cut in strips prevents the filling from completely occupying the entire cavity of the olive, which produces deformations of the olives and even their breaking due to the pressure they exert against one another in the transport and storing.

The ball-shaped fillings, which have approximately the size of the olive stone, solved these problems. Therefore, through different mechanisms olive fillings started to be made in the form of paste balls.

In order to carry out the filling of the olives, first the olive pitting was performed, through a punching machine, or similar mechanism, for later carrying out the filling of the olives once they were de-stoned. The disadvantage of this procedure is that it is not a continuous process, it is slow and inefficient, and in order to fill the olives it is necessary to have them de-stoned first, which entails the need for two different types of machinery, for the pitting, and for the filling, with the resulting expense increase.

In patent document ES 2 021 227 these inconveniences were solved through a machine for the pitting and filling of olives in the same operation, formed by an olive and filling ball supplier system, a positioning device thereof and a pitting and filling device, which comprises a set of elements fixed to a rotation axis, which, activated by cams, perform the synchronized movements needed for pitting and filling. The problem presented by this machine for the pitting and filling was precisely its complexity, especially of the positioning device, and of the pitting device, since the movement of several elements was associated to the same cam, thus increasing the complexity of the system, and the maintenance and repair costs.

Document US4644859 discloses a machine for pitting olives and for stuffing the pitted olives with an edible paste, with a plurality of axially opening bonnets arranged in a circle for rotation about an axis through a succession of stations. At a first station, a pit-containing olive is placed in each bonnet and held there by a fastening bush. Then the pit with an adhered tapin is punched form the olive, the pit is severed, and only the tapin is retained. As the pitted olive is rotated to a further station, a succession of orifices of a nozzle connected to an injector for stuffing paste is temporarily opened to the olive cavity. Then a gelification agent is applied to the paste in the olive, the tapin is restored to the olive as a cavity closure, and the fastening bush is withdrawn, freeing the stuffed olive from the machine.

It was therefore desirable a machine which carried out a fast and efficient olive pitting and filling, avoiding existing inconveniences in the previous systems of the state of the art.

### DESCRIPTION OF THE INVENTION

The present invention solves the existing problems in the state of the art through a machine which carries out in the same operation the pitting and filling of olives. The filling is carried out with paste balls having a similar size to that of the olive stones.

The machine for the pitting and filling of olives has fixed in a bed a pitting-filling set, an olive dosing apparatus and an olive carrier, which transports the olives from the dosing apparatus to the pitting-filling set, and a paste ball dosing apparatus and a paste ball carrier, which transports the paste balls from the paste ball dosing apparatus to the pitting-filling set.

The pitting-filling set has a drive shaft as main rotation element, which is activated by a geared motor.

A series of circular elements are fixed to the drive shaft which activates them, and said elements thanks to a set of cams produce the fixing of olives, their pitting and their filling with paste balls.

First, fixed to the drive shaft there exists a plate, which is arranged in the central area of the pitting-filling set, right between the area where the olive carrier connects to the pitting-filling set, and the area where the paste ball carrier connects to the pitting-filling set. This plate has equidistant seats distributed annularly in which the olives are set, where the pitting and filling is performed.

Additionally, fixed to the drive shaft there exists a circular retaining set, which is arranged next to the plate, arid which has a plurality of tubular retainers, the same number thereof as the number of seats of the plate, equidistant to one another, and annularly distributed, corresponding to the seats. These retainers retain the olives against the plate seats during the pitting and filling process. These retainers are connected to a first fixed cam, which controls the axial movement of the retainers, so that they move alternatively separating from and moving closer to the plate seats.

There also exists fixed to the drive shaft a circular punching set, which is arranged next to the retaining set, and which has a plurality of punchers, also the same number as the number of seats of the plate and retainers, equidistant to one another, and annularly distributed, corresponding to the seats and the retainers, and which go through said retainers. These punchers, through their axial movement, carry out the pitting of the olives. To that end, they are connected to a second fixed cam, which controls the axial-movement of the punchers, which move alternatively separating from and moving closer to the plate seats on the inside of the retainers.

Fixed to the drive shaft, there is a circular nozzle set, arranged next to the plate, but on the opposite side to the retainer set and the punching set. The nozzle set has the same number of tubular nozzles as the number of seats, retainers and punchers, equidistant to one another, and annularly distributed, corresponding to the seats. The nozzles, through an axial movement, carry out the collection of stones once they have been removed from the olives by the punchers. In order to attain this axial movement, the nozzles are connected to a third fixed cam, which controls the axial movement of the nozzles, so that they move alternatively separating from and moving closer to the plate seats on the opposite side to that where the retainers and punchers move, and collecting the stones when they are removed from the olives.

Additionally, there exists a detaching-filling set fixed to the drive shaft, on the side of the nozzle set, formed by a plurality of detaching-filling devices, the same number as the number of seats, retainers, punchers and nozzles, equidistant to one another, and annularly distributed. Through axial movements, the detaching-filling devices remove the stones which are in the nozzles and also insert the paste balls in the olive. These axial movements are attained through the connection of the detaching-filling devices to a fourth fixed cam, which controls the axial movement thereof, so that they move alternatively separating from and moving closer to the seats, removing the stones from the nozzles, and inserting the paste balls in the olive.

Additionally, fixed to the drive shaft there exists a circular pre-fill chamber set, which is arranged between the nozzle set and the detaching-filling set, and which is formed by pre-fill chambers, the same number thereof as the number of seats, retainers, punchers, nozzles and detaching-filling devices. These pre-fill chambers are arranged in an equidistant manner to one another, and annularly distributed, for the housing of the paste balls before they pass to the nozzles, while the detaching-filling devices remove the stones from said nozzles. That is, the pre-fill chambers receive the paste balls, and later displace vertically to enable the detaching-filling devices to extract the stone from the nozzle, in order to later return to their position where the detaching-filling devices pass the paste ball to the nozzles and from them to the olives. In order to carry out these vertical movements, the pre-fill chambers are connected to a fifth fixed cam, which controls said vertical movements.

In this way, all the elements carry out synchronized displacements within the 360° rotation of the drive shaft in a sequence of movements in which the retainers displace to retain the olives, and while the punchers de-stone them, the detaching-filling devices insert the paste balls in the pre-fill chambers, and the nozzles collect the extracted stones, for later receiving the paste balls once the stones are extracted from the nozzles through the detaching-filling devices, so that finally the detaching-filling devices insert the paste balls in the olives, and all of them returning to the initial position of a new cycle.

According to a preferred embodiment of the invention, the olive carrier and the paste ball carrier are two endless chains parallel to each other, and which are run by a plurality of wheels and tensioners. The movement of both chains is synchronized between each other and with the movement of the drive shaft, in order to provide olives and paste balls at a speed the pitting-filling set carries out the pitting and filling thereof.

### DESCRIPTION OF THE DRAWINGS

For an easier understanding of the invention, a non-limiting exemplary embodiment of the invention will be described bellow with reference to a series of drawings.
Figure 1 is a perspective front view of a particular embodiment of an olive pitting and filling machine object of the present invention, in which for clarity reasons only a detaching-filling device of the set of all detaching-filling devices has been represented.
Figure 2 is a perspective side view of the olive pitting and filling machine of figure 1.
Figure 3 is a rear view of the pitting-filling set of the machine of figures 1 and 2, in which for clarity reasons only one detaching-filling device of the set of all detaching-filling devices has been represented.
Figure 4 is a front sectional view of the machine in an initial position of the pitting and filling operation, in which for clarity reasons only the pitting-filling set has been represented.
Figure 5 is a front view of the olive pitting-filling set similar to figure 4, but in an initial position of the pitting and paste ball insertion in the pre-fill chamber.
Figure 6 is similar to figures 4-5, in this case showing the movements of the punching and retaining set, the de-stoned olive and the stone removed from the nozzle and the vertical movement of the pre-fill chamber.
Figure 7 is similar to figures 4-6, showing the punching set returning to its initial position, the return of the pre-fill chamber, and the movement of the detaching-filling set.
Figure 8 is similar to figures 4-7, in this case showing the movements of the nozzle and detaching-filling sets synchronized until carrying out the filling of the olive.
Figure 9 is similar to figures 4-8, in this case showing how the retaining set, once the filling is finished, drops the olive and returns to its initial position, like the rest of the elements, to start a new cycle.

In these figures reference is made to a set of elements, which are the following:
- 1.: bed
- 2.: pitting-filling set
- 3.: olive dosing apparatus
- 4.: olive carrier
- 5.: paste ball dosing apparatus
- 6.: paste ball carrier
- 7.: olives
- 8.: paste balls
- 9.: geared motor of the pitting-filling set
- 10.: drive shaft activated by the geared motor
- 11.: plate
- 12.: plate seats
- 13.: retaining set of the pitting-filling set
- 14.: retainers of the retaining set
- 15.: first cam for controlling the retainer axial movement
- 16.: punching set of the pitting-filling set
- 17.: punchers of the punching set
- 18.: second cam for controlling the puncher axial movement
- 19.: nozzle set of the pitting-filling set
- 20.: nozzles of the nozzle set
- 21.: olive stones
- 22.: third cam for controlling the nozzle axial movement
- 23.: detaching-filling set of the pitting-filling set
- 24.: detaching-filling devices of the detaching-filling set
- 25.: fourth cam for controlling the detaching-filling device axial movement
- 26.: pre-fill chamber set of the pitting-filling set
- 27.: pre-fill chambers of the pre-fill chamber set
- 28.: fifth cam for controlling the pre-fill chamber vertical movement
- 29.: annular channel of the cam cylinders

### DESCRIPTION OF PREFERRED EMBODIMENTS OF THE INVENTION

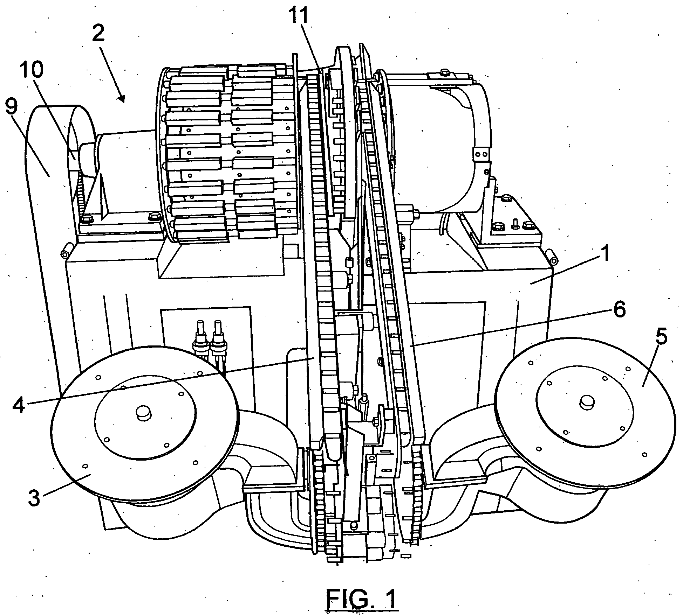

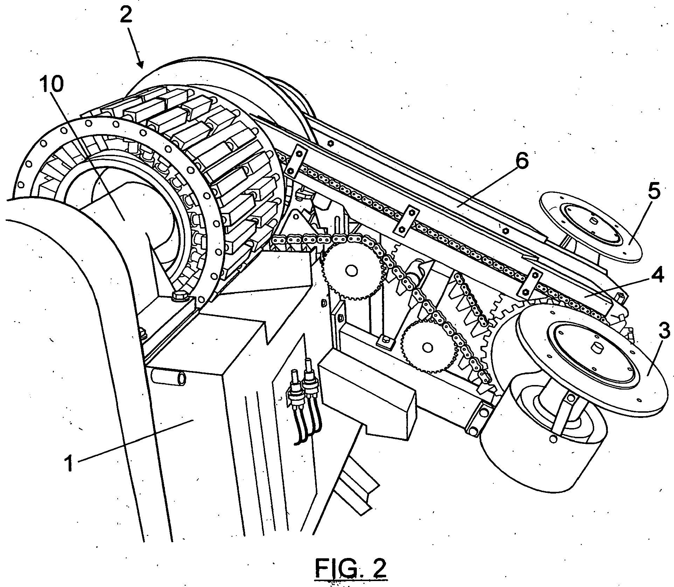

As it can be seen in the figures, particularly in figures 1 and 2, the object of the present invention is a machine for the pitting and filling of olives in the same operation, in which the filling is carried out through paste balls having a similar size to that of the stones removed from the olives.

The machine is formed by a pitting-filling set 2, an olive dosing apparatus 3, an olive carrier 4, which transports the olives from the olive dosing apparatus 3 to the pitting-filling set 2, a paste ball dosing apparatus 5, and a paste ball carrier 6, which transports the paste balls 8 from the paste balls dosing apparatus 5 to the pitting-filling set 2.

As it can be seen in figure 1, and in more detail in figure 2, according to a preferred embodiment of the invention, both the olive carrier 4, and the paste ball carrier 6 are endless chains parallel to each other, which move at the same speed, and are run by a plurality of wheels and tensioners, as needed. The movement of both chains is synchronized between each other, and with the movement produced in the pitting-filling set 2. The olives and paste balls move towards the pitting-filling set 2 from the dosing apparatuses 3, 5, arranged between the endless chain elements, and reach the pitting-filling set 2 at the same time, which has its movements for the olive pitting and filling synchronized with the movement of the olive carrier 4 and the paste ball carrier 6.

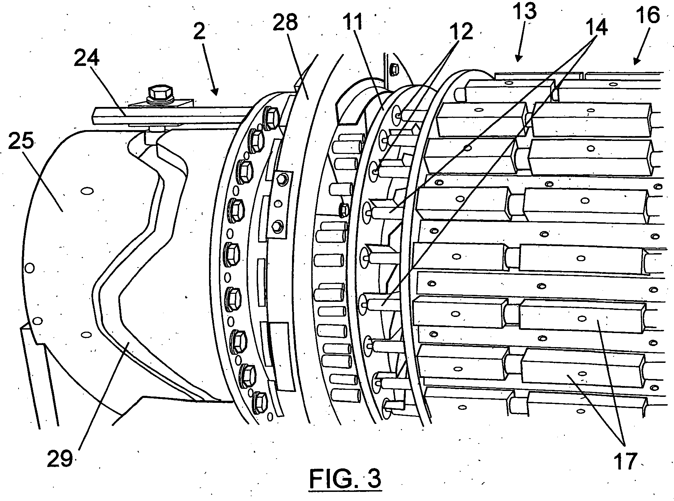

As regards the pitting-filling set 2, figures 1 and 2, and in greater detail figures 3 to 9, show all the elements and sets thereof which provide the movements needed for the olive pitting and filling.

The pitting-filling set 2 has a main activating element which is a drive shaft 10, activated by a geared motor 9, which provides the necessary rotation for all the movements carried out in the pitting and filling of olives to be produced.

In this drive shaft 10 there is fixed a plate 11, preferably in the central area of said drive shaft 10, and it is located between the area in which the olive carrier 4 delivers the olives 7 to the pitting-filling set 2 and the area in which the paste ball carrier 6 delivers the paste balls 8 to said pitting-filling set 2.

Located in the area closed to the plate 11 periphery there exists a plurality of seats 12 equidistant to one another and annularly distributed. In these seats 12 the olives 7 will be set, and they are the places where the pitting and filling thereof will take place. The number of seats 12 will vary according to design and according to the number of olives 7 which are to be treated per each plate 11 rotation, although preferably twenty-four seats 12 are used.

Next to the plate 11, there is fixed to the axis a circular retaining set 13, formed by a plurality of hollow tubular retainers 14, the same number thereof as the number of seats 12, which will be the number of olives 7 to be treated per plate 11 rotation. These retainers 14 are also equidistant to one another. The retainers 14, through an axial movement, get close to the olives and retain them against the plate 11 seats 12 during all the pitting and filling process, and later they axially withdraw to their initial position. In order to attain this axial movement, the retainers 14 are connected to a first cam 15. This first cam 15 controls the alternative axial movement of the retainers 14, both forwards and backwards towards the plate 11 seats 12.

Additionally, next to the retaining set 13, fixed to the drive shaft 10 there is a circular punching set 16, which is formed by a plurality of punchers 17, logically the same number thereof as the number of retainers 14 and seats 12, equidistant to one another and annularly distributed, which go through the retainers 14 and which, through a forward axial movement towards the seats 12, carry out the pitting of the olives 7. To that end, they are connected to a second fixed cam 18, which controls the axial movement of the punchers 17, and provides them with an alternative movement which moves them closer to and separates them from the plate 11 seats on the inside of the retainers 14.

Also fixed to the drive shaft 10, next to the plate 11, but on the opposite side to the retaining set 13 and to the punching set 16, there is a nozzle set 19, also circular and formed by the same number of tubular nozzles 20 as the number of seats 12, retainers 14 and punchers 17. Logically, these nozzles 20 are equidistant to one another, and are annularly distributed, corresponding to the seats 12. These nozzles 20, through an axial movement, are in charge of the collection of stones 21 once they have been removed from the olives 7 by the punchers 17. This axial movement is attained through the connection of the nozzles 20 to a third fixed cam .22, which is in charge of controlling this axial movement, the nozzles 20 moving alternatively and separating from the plate 11 seats 12 on the side opposite to that where the retainers 14 and punchers 17 move. Thus, when the stones 21 are removed from the olives 7, they are collected by these nozzles 20.

Next to this nozzle set 19, a detaching-filling set 23 is fixed to the drive shaft 10, formed by a plurality of detaching-filling devices 24, the same number thereof as the number of seats 12, retainers 14, punchers 17 and nozzles 20, equidistant to one another, and annularly distributed. These detaching-filling devices 24 are connected to a fourth fixed cam 25, which provides and controls an axial movement, through which they move alternatively separating from and moving closer to the seats 12, to carry out the stone removal from the nozzles 20, moving forward through the inside thereof, and also to insert the paste balls 8 inside the olives 7.

Finally, arranged on the drive shaft 10, between the nozzle set 19 and the detaching-filling set 23, there is a circular pre-fill chamber set 26 formed by pre-fill chambers 27, the same number thereof as the number of seats 12, retainers 14, punchers 17, nozzles 20 and detaching-filling devices 24, also equidistant to one another, and annularly distributed. These pre-fill chambers 26 are used for the housing of the paste balls 8 before they go on to the nozzles 20, while the detaching-filling devices 24 remove the stones 21 from said nozzles 20. The pre-fill chambers 27 receive the paste balls 8 pushed by the detaching-filling devices 24, and later displace vertically to enable the detaching-filling devices 24 to extract the stone 21 from the nozzle 20, in order to later return to their position where the detaching-filling devices 24 pass the paste ball 8 to the nozzles 20, and from them they pass it to the olives 7. In order to carry out these vertical displacements, the pre-fill chambers 27 are connected to a fifth fixed cam 28, which controls these vertical movements.

According to a preferred embodiment of the invention, the cams 15, 18, 22, 25, 28 with cylinders comprise in their wall channels 29 with various sections with different designs, to which the elements which are to be axially or vertically displaced are connected, originating the path of the elements of these sections the desired axial or vertical displacement.

Specifically, the first cam 15 and the second cam 18 are cylinders coaxial with the drive shaft 10, and fixed, each one of them having in their outer side wall a channel 29, to which there are respectively fixed an end of the retainers 14 and an end of the punchers 17. As regards the third cam 22 and the fourth cam 25, they are also cylinders coaxial with the drive shaft 10 and fixed, concentric to each other, so that the cylinder of the fourth cam 25 is an exterior one, and that of the third cam 22 is an interior one. Thus, the exterior cylinder has in its outer side wall the channel 29, and the interior cylinder has it in its inner side wall. To these channels 29 there are respectively fixed an end of the detaching-filling devices 24 and an end of the nozzles 20.

Preferably, as it can be seen in figure 1, and in detail in figure 3, each one of the channels 29 of the cams 15, 18, 22, 25 has sections of circumferential design which are located in parallel planes axially displaced from one another, and the separation of which defines the axial distance the elements move. Additionally, the channels 29 have sections of oblique design, which connect the sections of circumferential design and which originate the axial displacement of the elements, which are specifically the retainers 14, punchers 17, nozzles 20 and the detaching-filling devices 24.

Besides, the fifth cam 28 is a cylinder coaxial with the drive shaft 10, and fixed, which has in its cover facing the pre-fill chamber set 27 an eccentric annular channel 29, which originates the vertical displacement of the pre-fill chambers 27.

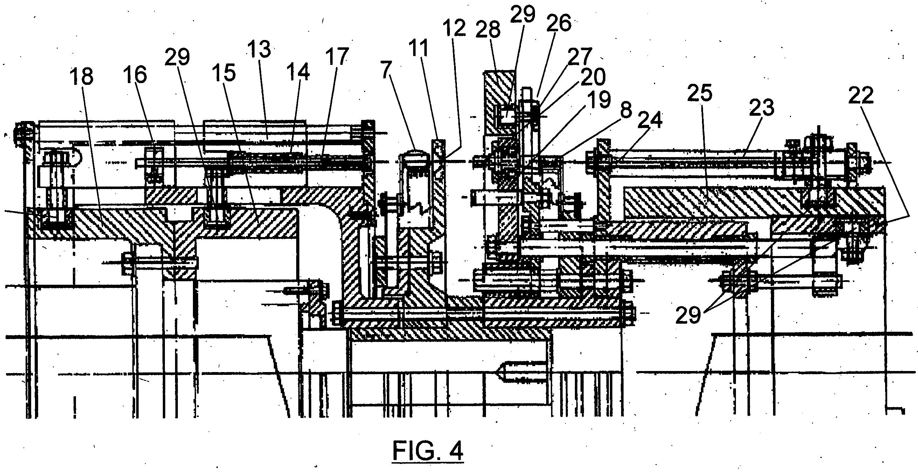

As regards the operation of the pitting-filling set 2, figures 4 to 9 show sectional views of different positions of the machine object of the present invention along the entire process of pitting and filling an olive 7 along a rotation of the drive shaft 10. In a 360° rotation of the drive shaft 10, the elements carry out synchronized displacements in a sequence of movements, in which, in the first 90° the pitting of the olives 7 takes place, and in the following 90° the filling of the previously de-stoned olives 7 takes place. In the following 180° the mechanisms have returned to their initial position to start a new cycle and no movement is produced.

With the help of figures 4 to 9, all the movements produced in the pitting-filling set 2 will be explained in detail, which for clarity purposes will be applied to only one olive 7 and only one paste ball 8, and to only one element of each one of the sets.

Figure 4 shows an olive 7 and a paste ball, together will all sets in initial position of the pitting and filling cycle.

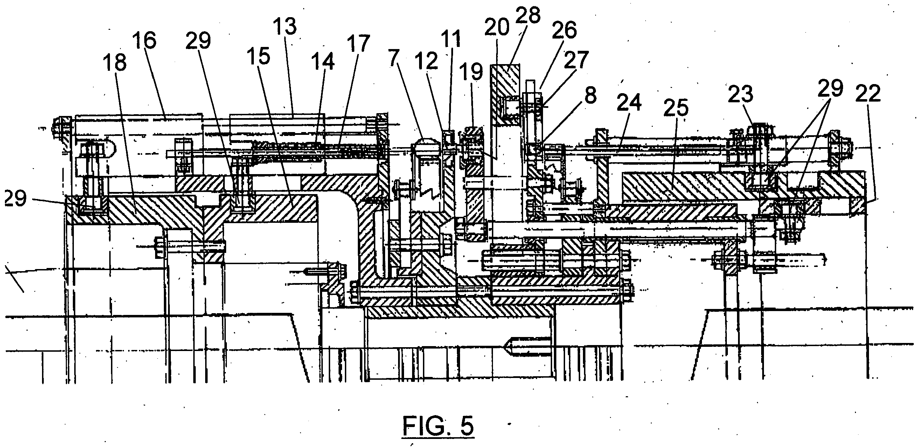

Figure 5 shows the start of the movements to carry out the pitting and placing the paste ball 8 in the pre-fill chamber 27, as it can be seen in the figure, the movement of the retainer 14 starts towards the olive 7 set on the seat 12. At the same time, the movement of the puncher 17 starts in order to carry out the pitting. On the other side of the plate 11, the movement of the nozzle 20 starts in order to collect the stone 21 when it is removed from the olive 7, while the detaching-filling device 24 starts the movement to place the paste ball 8 inside the pre-fill chamber 27.

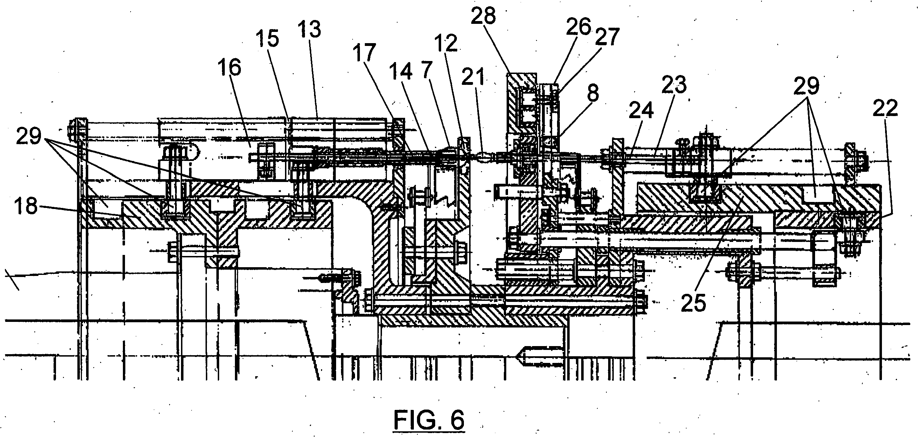

Figure 6 shows the movements of the retainer 14 activated by the first cam 15, the olive 7 being retained until it is filled. Meanwhile, the puncher 17 activated by the second cam 18 carries out the pitting. The stone 21 extracted by the nozzle 20 and in position to be ejected is also seen, and the nozzle 20 in position to receive the paste ball 8 after the stone 21 has been ejected from it. Besides, the pre-fill chamber 27 moves activated by the fifth cam 28 carrying the paste ball 8 and giving way to the detaching-filling device 24. The detaching-filling device 24 can also be seen in the position in which it ejects the stone 21 from the nozzle 20.

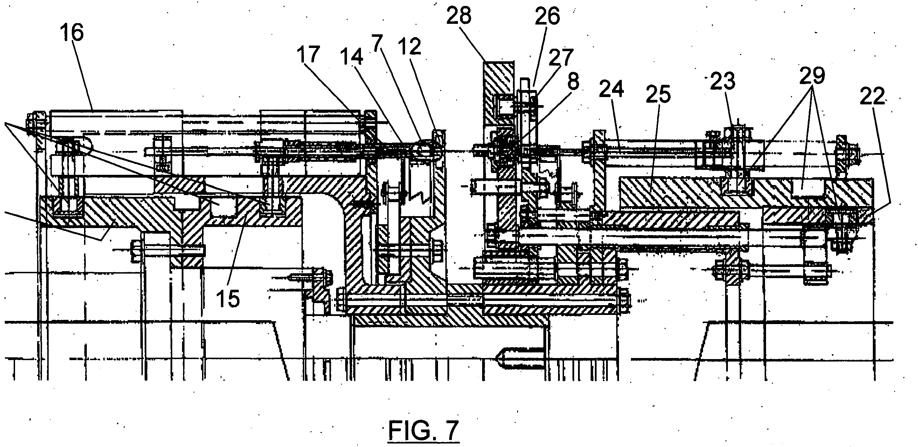

As it can be seen in figure 7, in the next step the puncher 17 returns to its initial position after carrying out the pitting. In this figure 7 the pre-fill chamber 27 is also seen, which returns to its initial position so that the detaching-filling device 24 can take the paste ball 8 to the nozzle 20. Likewise, the movement of the detaching-filling device 24 can also be seen, which moves to take the paste ball 8 from the pre-fill chamber 27 to the nozzle 20, and the nozzle 20 carrying the paste ball 8 is also shown.

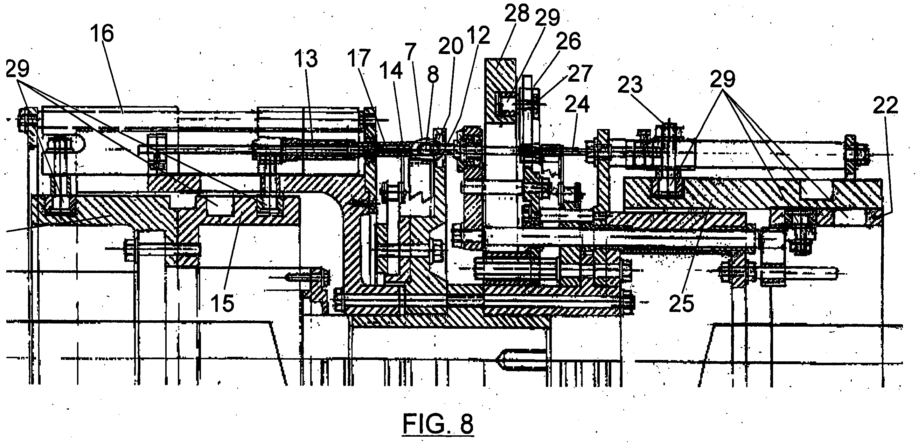

Figure 8 shows the retainer 14, as it keeps retaining the olive 7 until it is filled. Besides, the movement of the nozzle 20 carrying the paste ball 8 can be seen as well as how the detaching-filling device 24, synchronized with this movement, accompanies it until carrying out the filling of the olive 7.

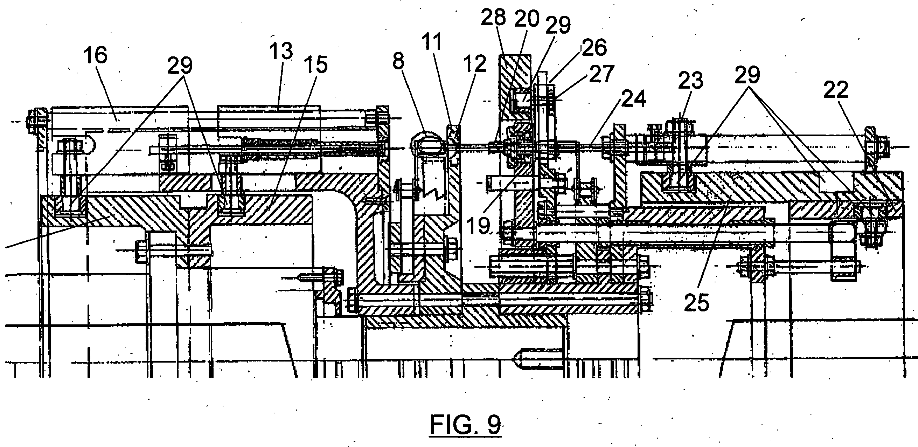

Finally, figure 9 shows how the olive 7 once filled is dropped and detached from the retainer 14 to fall in the collection means, while the retainer returns to its initial position. The detaching-filling device 24, after carrying out the filling of the olive keeps performing the movement to detach the olive 7 from the seat 12 once the retainer 14 withdraws, and later returns to its initial position.

Once the invention has been clearly described, it is noted that the particular embodiments described above can be modified in detail as long as the main principle and essence of the invention are not modified.

## Claims

1. Machine for olive pitting and filling, by paste ball (8) filling, which fixed to a bed (1) comprises
- a pitting-filling set (2),
- an olive dosing apparatus (3),
- an olive carrier (4), which carries the olives (7) from the olive dosing apparatus (3) to the pitting-filling set (2),
- a paste ball dosing apparatus (5), and
- a paste ball carrier (6), which carries the paste balls (8) from the paste ball dosing apparatus (5) to the pitting-filling set (2),
said olive (7) pitting and filling machine being **characterized in that** the pitting-filling set (2) comprises
- a geared motor (9) which activates a
- drive shaft (10) to which there are fixed
- a plate (11), arranged in the central area of the pitting-filling set (2), between the area where the olive carrier (4) connects to the pitting-filling set (2), and the area where the paste ball carrier (6) connects to the pitting-filling set (2), and comprising a plurality of seats (12) equidistant and annularly distributed in which the olives (7) are set for their pitting and filling,
- a circular retaining set (13), arranged next to the plate (11), comprising a plurality of tubular retainers (14) equidistant and annularly distributed, corresponding to the plate (11) seats (12), for the retaining of said olives (7) against the seats (12) during the pitting and filling, being said tubular retainers (14) connected to
- a first fixed cam (15), which controls the axial movement of the tubular retainers (14),
- a circular punching set (16), arranged next to the retaining set (13), comprising a plurality of punchers (17) equidistant to one another and annularly distributed, corresponding to the seats (12) and the tubular retainers (14), which go through said retainers, for the pitting of the olives (7), being said punchers (17) connected to
- a second fixed cam (18), which controls the axial movement of said punchers (17),
- a circular nozzle set (19), arranged next to the plate (11), on the opposite side to the retaining set (13) and to the punching set (16), comprising a plurality of tubular nozzles (20) equidistant to one another and annularly distributed, corresponding to the seats (12), for collecting the stones (21) once they are removed from the olives (7) by means of punchers (17), being said nozzles (20) connected to
- a third fixed cam (22), which controls the axial movement of the nozzles (20),
- a circular detaching-filling set (23), on the nozzle set (19) side, comprising a plurality of tubular detaching-filling devices (24) equidistant to one another and annularly distributed, for detaching the stones (21) from the nozzles (20) and inserting the paste balls (8) in the olive (7), being said detaching-filling devices (24) connected to
- a fourth fixed cam (25), which controls the axial movement of the detaching-filling devices (24), and
- a circular pre-fill chamber set (26), arranged between the nozzle set (19) and the detaching-filling set (23), comprising a plurality of pre-fill chambers (27) equidistant to one another and annularly distributed, for housing the paste balls (8) before they are placed in the nozzles (20), while the detaching-filling devices (24) detach the stones (21) from said nozzles (20), being said pre-fill chambers (27) connected to
- a fifth fixed cam (28), which controls the vertical movement of the pre-fill chambers (27), being the tubular retainers (14), punchers (17), nozzles (20), detaching-filling devices (24) and pre-fill chambers (27) activated by their respective cams (15, 18, 22, 25, 28), and carrying out synchronized displacements within the 360° rotation of the drive shaft (10) in a sequence of movements in which the tubular retainers (14) displace to retain the olives (7), and while the punchers (17) de-stone them, the detaching-filling devices (24) insert the paste balls (8) in the pre-fill chambers (27), and the nozzles (20) collect the extracted stones (21), for later receiving the paste balls (8) once the stones (21) are released through the detaching-filling devices (24), finally the detaching-filling devices (24) insert the paste balls (8) in the olives (7), and all of them returning to the initial position of a new cycle.

2. Machine for olive pitting and filling, according to claim 1, **characterized in that** the olive carrier (4) and the paste ball carrier (6) are two endless chains parallel to each other, run by a plurality of wheels and tensioners, the movement of said chains being synchronized with the movement of the drive shaft (10).

3. Machine for olive pitting and filling, according to any of the preceding claims, **characterized in that**
- the first cam (15) and the second cam (18) are cylinders coaxial with the drive shaft (10) and fixed, each one of them comprising in their outer side wall a channel (29), to which there are respectively fixed an end of the tubular retainers (14) and an end of the punchers (17),
- the third cam (22) and the fourth cam (25) are cylinders coaxial with the drive shaft (10) and fixed, concentric to each other, being the cylinder of the fourth cam (25) exterior and that of the third cam (22) interior, the outer cylinder comprising in its outer side wall and the inner cylinder in its inner side wall a channel (29), to which there are respectively fixed an end of the detaching-filling devices (24) and an end of the nozzles (20),
- and **in that** each one of the channels (29) of the cams (15, 18, 22, 25) comprises
- sections of circumferential design located in parallel planes axially displaced from one another, and
- sections of oblique design which connect the sections of circumferential design and which originate the axial displacement of the tubular retainers (14), punchers (17), nozzles (20) and detaching-filling devices (24).

4. Machine for olive pitting and filling, according to any of the preceding claims, **characterized in that** the fifth cam (28) is a cylinder coaxial with the drive shaft (10), and fixed, which comprises in its cover facing the pre-fill chamber set (26) an eccentric annular channel (29), which originates the vertical displacement of the pre-fill chambers (27).

## Patentansprüche

1. Maschine zum Entkernen und Füllen von Oliven durch die Befüllung mit Pastekugeln (8), umfassend auf einem Unterbau (1) befestigt
- einen Entkern- und Füllsatz (2),
- eine Olivendosiervorrichtung (3),
- einen Olivenförderer (4), der die Oliven (7) von der Olivendosiervorrichtung (3) zum Entkern- und Füllsatz (2) fördert,
- eine Pastekugeldosiervorrichtung (5),
- einen Pastekugelförderer (6), der die Pastekugeln (8) von der Pastekugeldosiervorrichtung (5) zum Entkern- und Füllsatz (2) fördert,
wobei die genannte Maschine zum Entkernen und Füllen von Oliven (7) **dadurch gekennzeichnet ist, dass** der Entkern- und Füllsatz (2) umfasst
- einen Getriebemotor (9), der eine
- Antriebswelle (10) antreibt, an welcher befestigt sind
- eine Scheibe (11), die im Mittelbereich des Entkern- und Füllsatzes (2), zwischen dem Bereich, in dem der Olivenförderer (4) mit dem Entkern- und Füllsatz (2) verbunden ist, und dem Bereich, in dem der Pastekugelförderer (6) mit dem Entkern- und Füllsatz (2) verbunden ist, angeordnet ist, und eine Vielzahl von gleichabständigen und ringförmig angeordneten Aufnahmen (12) umfasst, in die die Oliven (7) zum Entkernen und Füllen eingesetzt werden,
- ein neben der Scheibe (11) angeordneter kreisförmiger Haltesatz (13), umfassend eine Vielzahl von gleichabständigen und ringförmig angeordneten röhrenförmigen Haltern (14), die mit den Aufnahmen (12) der Scheibe (11) zusammenpassen, um die genannten Oliven (7) beim Entkernen und Füllen in den Aufnahmen (12) zu fixieren, wobei die genannten röhrenförmigen Halter (14) verbunden sind mit
- einer ersten festen Nocke (15), die die axiale Bewegung der röhrenförmigen Halter (14) steuert,
- einem neben dem Haltesatz (13) angeordneten kreisförmigen Stanzsatz (16), umfassend eine Vielzahl von zueinander gleichabständigen und ringförmig angeordneten Stanzen (17), die mit den Aufnahmen (12) und den röhrenförmigen Haltern (14) zusammenpassen und zum Entkernen der Oliven (7) durch die genannten Halter hindurchfahren, wobei die genannten Stanzen (17) verbunden sind mit
- einer zweiten festen Nocke (18), die die axiale Bewegung der genannten Stanzen (17) steuert,
- einem neben der Scheibe (11) auf der gegenüberliegenden Seite des Haltesatzes (13) und des Stanzsatzes (16) angeordneten kreisförmigen Düsensatz (19), umfassend eine Vielzahl von zueinander gleichabständigen und ringförmig angeordneten röhrenförmigen Düsen (20), die mit den Aufnahmen (12) zusammenpassen, um die Steine (21) nach deren Entfernen aus den Oliven (7) mittels Stanzen (17) aufzunehmen, wobei die genannten Düsen (20) verbunden sind mit
- einer dritten festen Nocke (22), die die axiale Bewegung der Düsen (20) steuert,
- einem kreisförmigen Ablöse- und Füllsatz (23) auf der Seite des Düsensatzes (19), umfassend eine Vielzahl von zueinander gleichabständigen und ringförmig angeordneten röhrenförmigen Ablöse- und Füllvorrichtungen (24) zum Ablösen der Steine (21) von den Düsen (20) und Einsetzen der Pastekugeln (8) in die Olive (7), wobei die genannten Ablöse- und Füllvorrichtungen (24) verbunden sind mit
- einer vierten festen Nocke (25), die die axiale Bewegung der Ablöse- und Füllvorrichtungen (24) steuert, und
- einem kreisförmigen, zwischen dem Düsensatz (19) und dem Ablöse- und Füllsatz (23) angeordneten Vorfüllkammersatz (26), umfassend eine Vielzahl von zueinander gleichabständigen und ringförmig angeordneten Vorfüllkammern (27) zur Unterbringung der Pastekugeln (8), bevor diese in die Düsen (20) eingesetzt werden, während die Ablöse- und Füllvorrichtungen (24) die Steine (21) von den genannten Düsen (20) ablösen, wobei die genannten Vorfüllkammern (27) verbunden sind mit
- einer fünften festen Nocke (28), die die vertikale Bewegung der Vorfüllkammern (27) steuert, wobei die röhrenförmigen Halter (14), Stanzen (17), Düsen, (20), Ablöse- und Füllvorrichtungen (24) und Vorfüllkammern (27) von ihren jeweiligen Nocken (15, 18, 22, 25, 28) betätigt werden und in einer Abfolge von Bewegungen synchronisiert im 360°-Rotationsbereich der Antriebswelle (10) verfahren, wobei die röhrenförmigen Halter (14) verfahren, um die Oliven (7) zu fixieren und, während die Stanzen (17) diese entsteinen, setzen die Ablöse- und Füllvorrichtungen (24) die Pastekugeln (8) in die Vorfüllkammern (27) ein und die Düsen (20) nehmen die entfernten Steine (21) auf, um später die Pastekugeln (8) zu erhalten, nachdem die Steine (21) durch die Ablöse- und Füllvorrichtungen (24) abgelöst worden sind, wobei schließlich die Ablöse- und Füllvorrichtungen (24) die Pastekugeln (8) in die Oliven (7) einsetzen und alle in die Ausgangsposition eines neuen Zyklus zurückfahren.

2. Maschine zum Entkernen und Füllen von Oliven nach Anspruch 1, **dadurch gekennzeichnet, dass** der Olivenförderer (4) und der Pastekugelförderer (6) zwei zueinander parallele Endlosketten sind, die von einer Vielzahl von Rädern und Spannelementen angetrieben werden, wobei die Bewegung der genannten Ketten mit der Bewegung der Antriebswelle (10) synchronisiert ist.

3. Maschine zum Entkernen und Füllen von Oliven nach einem der vorstehenden Ansprüche, **dadurch gekennzeichnet, dass**
- die erste Nocke (15) und die zweite Nocke (18) Zylinder sind, die koaxial zur Antriebswelle (10) angeordnet und befestigt sind, wobei jeder von ihnen an seiner äußeren Seitenwand einen Kanal (29) aufweist, an dem jeweils ein Ende der röhrenförmigen Halter (14) und ein Ende der Stanzen (17) befestigt ist,
- die dritte Nocke (22) und die vierte Nocke (25) Zylinder sind, die koaxial zur Antriebswelle (10) angeordnet und konzentrisch zueinander befestigt sind, wobei der Zylinder der vierten Nocke (25) außen und der Zylinder der dritten Nocke (22) innen sitzen, wobei der Außenzylinder an seiner äußeren Seitenwand und der Innenzylinder an seiner inneren Seitenwand einen Kanal (29) aufweisen, an dem jeweils ein Ende der Ablöse- und Füllvorrichtungen (24) und ein Ende der Düsen befestigt ist (20),
- und dass jeder der Kanäle (29) der Nocken (15, 18, 22, 25)
- zirkulär ausgestaltete Abschnitte in parallelen Ebenen, die axial voneinander versetzt sind, und
- schiefwinklig ausgestaltete Abschnitte, die die zirkulär ausgestalteten Abschnitte verbinden und die axiale Bewegung der röhrenförmigen Halter (14), Stanzen (17), Düsen (20) und Ablöse- und Füllvorrichtungen (24) verursachen, umfasst.

4. Maschine zum Entkernen und Füllen von Oliven nach einem der vorstehenden Ansprüche, **dadurch gekennzeichnet, dass** die fünfte Nocke (28) ein koaxial zur Antriebswelle angeordneter Zylinder ist, und befestigt ist, der in seiner dem Vorfüllkammersatz (26) gegenüberliegenden Abdeckung einen exzentrischen Ringkanal (29) umfasst, der die vertikale Bewegung der Vorfüllkammern (27) verursacht.

## Revendications

1. Machine pour dénoyauter et farcir les olives, par farce avec boule de pâte (8), qui, fixée sur un lit (1), comprend
- un ensemble de dénoyautage-farce (2),
- un appareil de dosage d'olives (3),
- un transporteur d'olives (4), qui transporte les olives (7) de l'appareil de dosage d'olives (3) vers l'ensemble de dénoyautage-farce (2),
- un appareil de dosage de boules de pâte (5),
- et un transporteur de boules de pâte (6), qui transporte les boules de pâte (8) de l'appareil de dosage de boules de pâte (5) vers l'ensemble de dénoyautage-farce (2),
ladite machine pour dénoyauter et farcir les olives (7) étant **caractérisée en ce que** l'ensemble de dénoyautage-farce (2) comprend
- un moteur à engrainages (9) qui active un
- arbre de transmission (10) sur lequel il est fixé
- une plaque (11) disposée dans la zone centrale de l'ensemble de dénoyautage-farce (2), entre la zone où le transporteur d'olives (4) est connecté à l'ensemble de dénoyautage-farce (2), et la zone où le transporteur de boules de pâte (6) est connecté à l'ensemble de dénoyautage-farce (2), et comprenant une pluralité de sièges (12) équidistants et répartis de manière annulaire dans lesquels les olives (7) sont disposées pour leur dénoyautage et leur farce,
- un ensemble de retenu circulaire (13), disposé à côté de la plaque (11), comprenant une pluralité d'éléments de retenue tubulaires (14) équidistants et répartis de façon annulaire, correspondant aux sièges (12) de la plaque (11), pour retenir lesdites olives (7) contre les sièges (12) pendant le dénoyautage et la farce, lesdits éléments de retenue tubulaires (14) étant connectés à
- une première came fixe (15), qui contrôle le mouvement axial des éléments de retenue tubulaires (14),
- un ensemble de poinçonnage circulaire (16), disposé à côté de l'ensemble de retenue (13), comprenant une pluralité de poinçons (17) équidistants les uns des autres et répartis de manière annulaire, correspondant aux sièges (12) et aux éléments de retenue tubulaires (14), qui traversent lesdits éléments de retenue, pour le dénoyautage des olives (7), lesdits poinçons (17) étant connectés à
- une deuxième came fixe (18), qui contrôle le mouvement axial desdits poinçons (17),
- un ensemble de buses circulaire (19), disposées à côté de la plaque (11), sur le côté opposé à l'ensemble de retenue (13) et à l'ensemble de poinçonnage (16), comprenant une pluralité de buses tubulaires (20) équidistantes les unes des autres et réparties de manière annulaire, correspondant aux sièges (12), pour recueillir les noyaux (21) une fois qu'ils ont été enlevés des olives (7) au moyen des poinçons (17), lesdites buses (20) étant connectées à
- une troisième came fixe (22), qui contrôle le mouvement axial des buses (20),
- un ensemble de détachement-farce circulaire (23), sur le côté de l'ensemble de buses (19), comprenant une pluralité de dispositifs tubulaires de détachement-farce (24) équidistants les uns des autres et répartis de manière annulaire pour détacher les noyaux (21) des buses (20) et insérer les boules de pâte (8) dans l'olive (7), lesdits dispositifs de détachement-farce (24) étant connectés à
- une quatrième came fixe (25), qui contrôle le mouvement axial des dispositifs de détachement-farce (24), et
- un ensemble de chambre de pré-farce circulaire (26), disposé entre l'ensemble de buses (19) et l'ensemble de détachement-farce (23); comprenant une pluralité de chambres de pré-farce (27) équidistantes les unes des autres et réparties de manière annulaire pour loger les boules de pâte (8) avant les placer dans les buses (20), tandis que les dispositifs de détachement-farce (24) détachent les noyaux (21) desdits buses (20), lesdites chambres de pré-farce (27) étant connectées à
- une cinquième came fixe (28), qui contrôle le mouvement vertical des chambres de pré-farce (27), les éléments de retenue tubulaires (14), les poinçons (17), les buses (20), les dispositifs de détachement-farce (24) et les chambres de pré-farce (27) étant activés par leurs cames respectives (15, 18, 22, 25, 28), et effectuant des déplacement synchronisés dans la rotation à 360° de l'arbre de transmission (10) selon une séquence de mouvements dans laquelle les éléments de retenue tubulaires (14) se déplacent pour retenir les olives (7), et pendant que les perforateurs (17) les dénoyautent, les dispositifs de détachement-farce (24) insèrent les boules de pâte (8) dans les chambres de pré-farce (27), et les buses (20) collectent les noyaux extraits (21), pour ensuite recevoir les boules de pâte (8) une fois que les noyaux (21) sont libérés à travers les dispositifs de détachement-farce (24), enfin les dispositifs de détachement-farce (24) insèrent les boules de pâte (8) dans les olives (7), et ils retournent tous dans la position initiale d'un nouveau cycle.

2. Machine pour dénoyauter et farcir les olives selon la revendication 1, **caractérisée en ce que** le transporteur d'olives (4) et le transporteur de boules de pâte (6) sont deux chaînes sans fin parallèles l'une à l'autre, actionnées par une pluralité de roues et tendeurs, le mouvement desdites chaînes étant synchronisé avec le mouvement de l'arbre de transmission (10).

3. Machine pour dénoyauter et farcir les olives selon l'une quelconque des revendications précédentes, **caractérisée en ce que**
- la première came (15) et la deuxième came (18) sont des cylindres coaxiaux à l'arbre de transmission (10) et fixes, chacune d'elles comprenant dans leur paroi latérale extérieure un canal (29), auquel sont respectivement fixées une extrémité des éléments de retenue tubulaires (14) et une extrémité des poinçons (17),
- la troisième came (22) et la quatrième came (25) sont des cylindres coaxiaux à l'arbre de transmission (10) et fixes, concentriques l'une à l'autre, le cylindre de la quatrième came (25) étant extérieur et celui de la troisième came (22) étant intérieure, le cylindre extérieur comprenant dans sa paroi latérale extérieure et le cylindre intérieur dans sa paroi latérale intérieure un canal (29), auquel sont respectivement fixées une extrémité des dispositifs de détachement-farce (24) et une extrémité des buses (20),
- et **en ce que** chacun des canaux (29) des cames (15, 18, 22, 25) comprend
- des sections de conception circonférentielle situées dans des plans parallèles décalés axialement les uns par rapport aux autres, et
- des sections de conception oblique qui relient les sections de conception circonférentielle et qui sont à l'origine du déplacement axial des éléments de retenue tubulaires (14), des poinçons (17), des buses (20) et des dispositifs de détachement-farce (24).

4. Machine pour dénoyauter et farcir les olives selon l'une quelconque des revendications précédentes, **caractérisée en ce que** la cinquième came (28) est un cylindre coaxial à l'arbre de transmission (10), et fixe, qui comprend dans son couvercle tourné vers l'ensemble des chambres de pré-farce (26) un canal annulaire excentré (29), qui est à l'origine du déplacement vertical des chambres de pré-farce (27).
